Europäisches Patentamt

European Patent Office

Office européen des brevets

(19)

(11) Numéro de publication: **0 177 487**
**B1**

(12) # FASCICULE DE BREVET EUROPEEN

(45) Date de publication du fascicule du brevet:
**29.11.89**

(21) Numéro de dépôt: **84901317.2**

(22) Date de dépôt: **04.04.84**

(86) Numéro de dépôt international:
**PCT/CH 84/00055**

(87) Numéro de publication internationale:
**WO 85/04743 (24.10.85 Gazette 85/23)**

(51) Int. Cl.⁴: **G 07 F 11/58**, G 07 F 9/10,
G 07 F 11/26

(54) **DISTRIBUTEUR DE PRODUIT CHAUD ET FROID.**

(43) Date de publication de la demande:
**16.04.86 Bulletin 86/16**

(45) Mention de la délivrance du brevet:
**29.11.89 Bulletin 89/48**

(84) Etats contractants désignés:
**AT BE CH DE FR GB LI LU NL SE**

(56) Documents cités:
**neant**

(73) Titulaire: **JUILLET, Hubert, 8 rue Charles Péguy,
F-68100 Mulhouse (FR)**

(84) Etats contractants désignés: **BE CH LI LU NL**

(73) Titulaire: **ROBOTIQUE, ELECTRONIQUE ET
TECHNOLOGIE, Zone Industrielle de Cantimpré,
F-59406 Cambrai (FR)**

(84) Etats contractants désignés: **DE FR GB SE AT**

(72) Inventeur: **JUILLET, Hubert, 8 rue Charles Péguy,
F-68100 Mulhouse (FR)**
Inventeur: **ROBOTIQUE, ELECTRONIQUE ET
TECHNOLOGIE, Zone Industrielle de Cantimpré,
F-59406 Cambrai (FR)**

(74) Mandataire: **Charbonnier, Georges R., 8, Avenue
Peschier, CH-1206 Genève (CH)**

ACTORUM AG

## Description

La présente invention concerne un distributeur automatique de produits chauds et/ou froids selon le préambule de la revendication 1.

Le brevet français No 1 508 444 décrit un distributeur automatique de produits chauds comprenant une armoire isotherme, des rayons fixes disposés dans cette armoire et sur lesquels sont placés côte à côte, de manière à former des rangées, les produis à distribuer, un système de sélection à prépaiement, un four à micro-ondes, une ouverture de sortie adjacente au four, un dispositif robotique constitué par un chariot élévateur et un système de transfert agencé pour faire glisser chaque rangée de produits sur son rayon par une action exercée latéralement sur le dernier produit de manière que le premier produit vienne prendre place sur le chariot élévateur, par lequel il est acheminé dans le four et en regard de l'ouverture de sortie.

Ce distributeur présente de nombreux inconvénients, en particulier:

1) le public a directement accès au four à travers l'ouverture de sortie ce qui peut avoir de graves conséquences aussi bien pour les utilisateurs que pour l'appareil en cas d'utilisation erronée ou malveillante.

2) Le dispositifi robotique – notamment le système de transfert – occupe une place démesurée en regard de la surface disponible pour les produits.

Par ailleurs, le brevet suisse No 487 785 montre un système de transfert comprenant des tapis roulants pour acheminer des produits d'un point à un autre.

La présente invention a pour objet un distributeur de produits chauds et/ou froids présentant certaines analogies avec le distributeur susmentionné mais remédiant à ses principaux inconvénients grâce, notamment, à l'utilisation de tapis roulants.

Un tel problème est résolu par les caractéristiques de la revendication 1.

L'invention sera bien comprise en se référant à la description suivante faite à titre d'exemple non limitatif et aux dessins annexés dans lesquel:

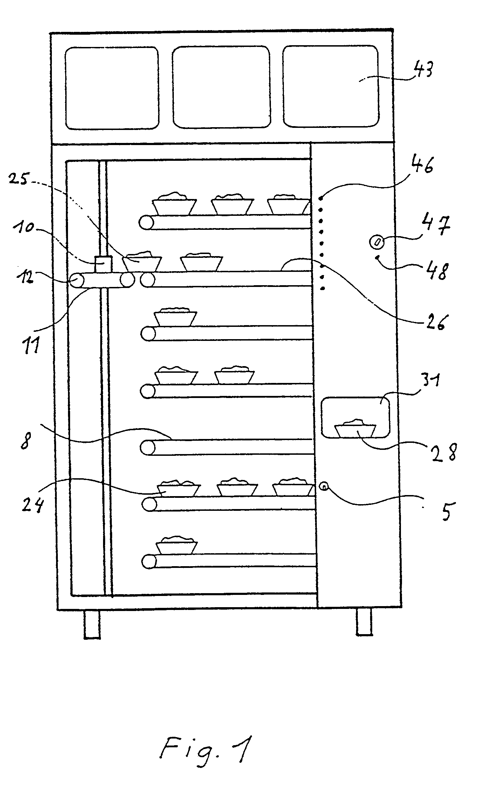

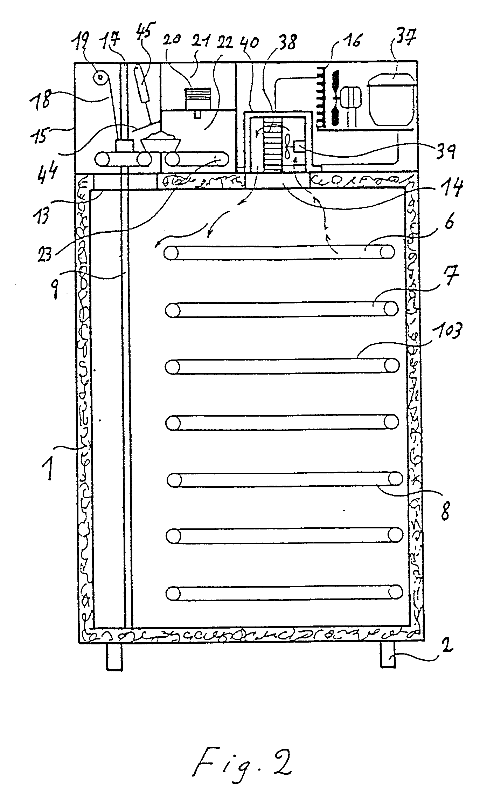

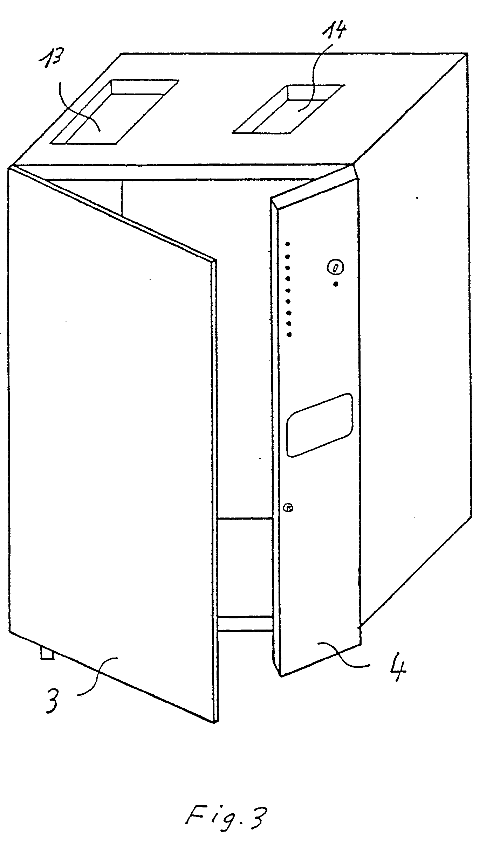

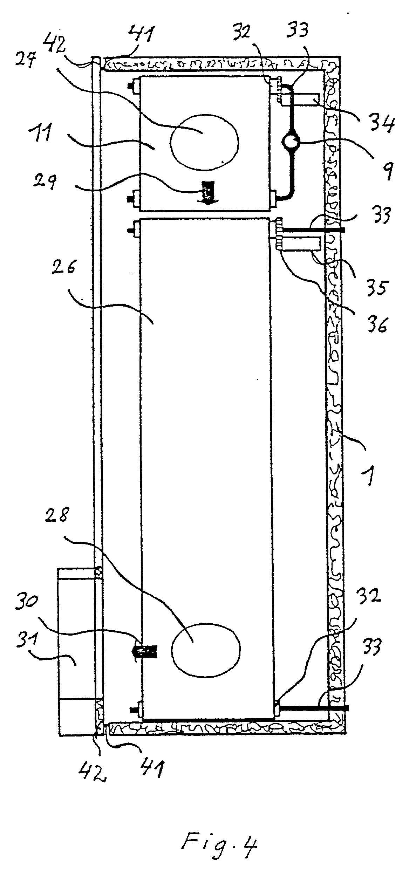

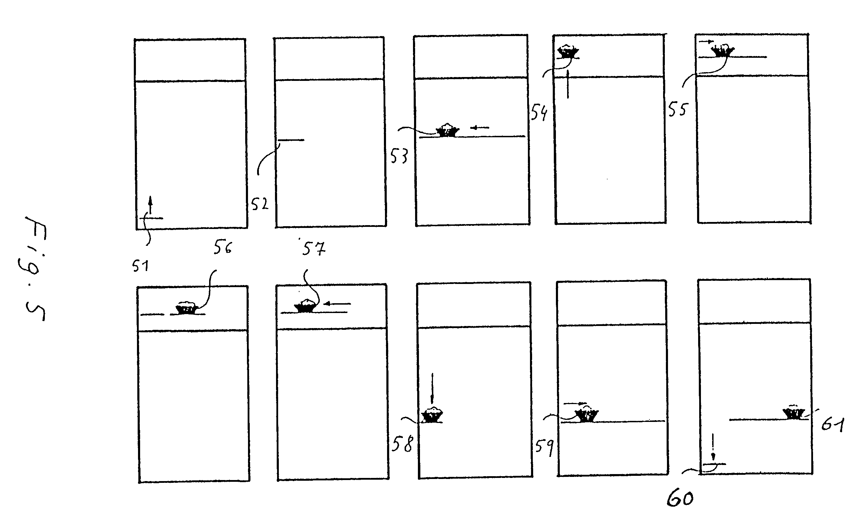

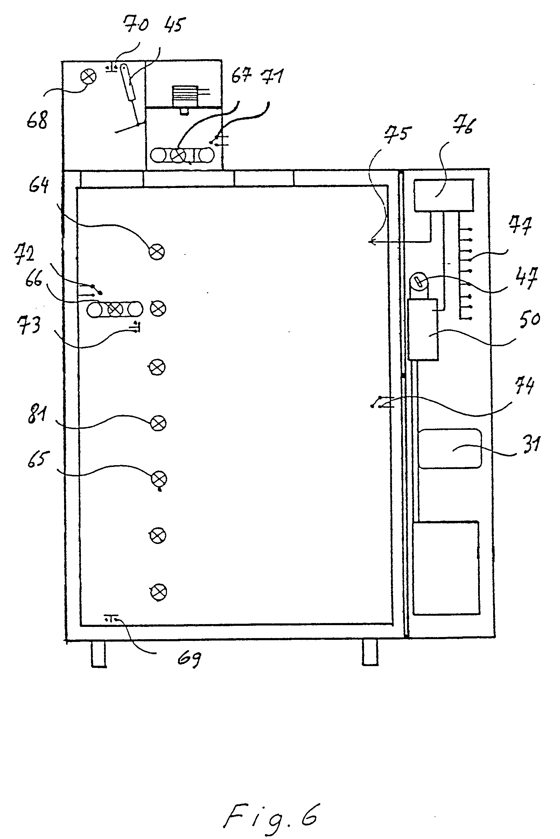

La figure 1 est une vue de face de l'appareil toutes portes fermées, tel que le voit l'utilisateur placé devant celui-ci.

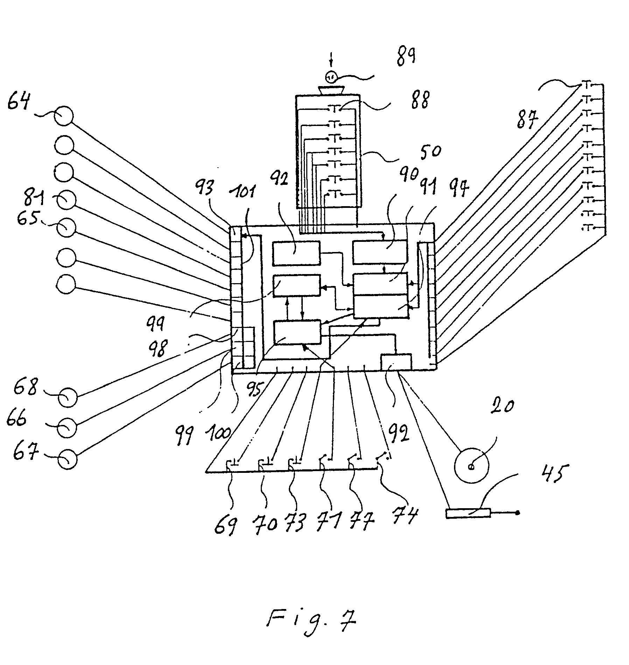

La figure 2 est une coupe verticale de l'appareil avec le frigo et le four et le four à micro-ondes en place.

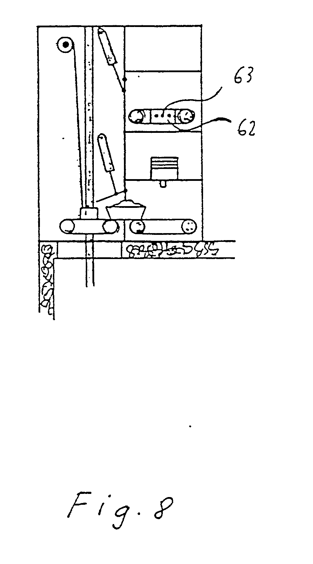

La figure 3 est une perspective cavalière de la caisse de l'appareil avec les deux portes avant entrouvertes.

La figure 4 est une coupe horizontale de l'appareil.

La figure 5 représente les différents mouvements possibles des organes mobiles et des produits alimentaires de l'appareil.

La figure 6 représente une vue de face de l'appareil avec le four à micro-ondes en place et l'une des deux portes entièrement ouverte, de façon à voir ce qui se trouve au dos.

La figrue 7 représente un synoptique de l'asservissement électronique de l'appareil.

La figure 8 représente une variante du four double, l'un fonctionnant par micro-ondes, l'autre par conduction thermique.,

Le procédé selon l'invention comporte essentiellement une armoire isotherme (1) montée sur des pieds (2), fermée par deux portes, l'une en verre (3), l'autre en métal (4). Les portes sont verrouillées par une serrure (5).

A l'intérieur de cette armoire sont disposées des étagères représentées en (6), (7) et (8). Est également disposée à l'intérieur de l'armoire une barre verticale (9) sur laquelle se déplace un ascenseur constitué d'un manchon (10), d'un tapis roulant (11) et d'un cylindre (12).

Dans le plafond de l'armoire sont pratiquées deux ouvertures (13) et (14). Sur l'ouverture (13) est placé un four à micro-ondes (15), tandis que sur l'ouverture (14) est placé un groupe frigorifique (16).

La barre verticale est fixée à sa partie supérieure dans le four à micro-ondes par une vis (17). L'ascenseur peut se déplacer jusque dans ce four; pour ce faire, il est tiré par un cable (18) qui s'enroule sur la poulie d'un moteur (19).

En (20) est représenté le magnétron du générateur du four A micro-ondes. En (21) est représentée une enceinte destinée à recevoir l'alimentation du magnétron. En (22) est représentée la cavité dans laquelle sont réchauffés les produits. Un tapis roulant destiné à véhiculer les produits est également disposé dans la cavité, il est entraîné par un moteur situé à l'extérieur de cette cavité et dont le mouvement est transmis par un axe représenté en (23).

En (24) est représenté un produit sur une étagère. En (25) est représenté un produit qui, sous l'action simultanée des tapis roulants (103) et (11), vient se placer sur l'ascenseur. En (27) est représenté un produit sur le tapis de l'ascenseur et en (28) un produit placé sur le tapis d'une étagère en face de l'ouverture de sortie. La flèche (29) indique le chemin que va prendre le produit (27) et la flèche (30) indique le chemin que va prendre le produit (28). En (31) est représentée l'ouverture par laquelle le client prend le produit (28).

Les tapis roulants des étagères et de l'ascenseur sont entraînés par des cylindres représentés en (32), en rotation sur des axes (33) et entraînés par des moteurs (34) et (35) par l'intermédiaire d'engrenages représentés en (36).

En (37) est représenté le compresseur du groupe frigorifique. En (38), la batterie d'évaporation du groupe frigorifique, en (39) un ventilateur, en (40) un caisson isotherme.

En (41), sont représentés des joints isothermes pour l'étanchéité desportes avant. En (42) sont représentés les pivots permettant à ces ports de pivoter.

En (43) est représenté un panneau d'affichage disposé devant le groupe frigorifique.

Le four à micro-ondes et le groupe frigorifique sont posés à l'extérieur, sur le plafond de l'armoire. Le portillon du four à micro-ondes est représenté en (44), il est manœuvré par un électro-aimant à noyau plongeur (45).

En (46) est représenté un bouton permettant la sélection d'un produit. En (47) est représentée la fente d'introduction de la monnaie et en (48) un bouton qui permet de débloquer le monnayeur (50) placé dans la porte (4).

Les différents stades du système mobile sont:
- (51), départ de l'ascenseur après sélection par le client ayant appuyé sur la touche (46) et ayant introduit la monnaie dans la fente (47).
- (52), arrêt de l'ascenseur en face de l'étagère où sont entreposés les produits correspondant à la touche (46).
- (53), mise en marche des deux tapis roulants de l'étagère et de l'ascenseur pour amener le produit sur ledit ascenseur.
- (54), montée de l'ascenseur jusque dans le four.
- (55), mise en marche du tapis roulant de l'ascenseur et du tapis roulant du four pour amener le produit dans ledit four.
- (56), immobilisation du produit dans le four pendant toute la durée du réchauffage de ce dernier.
- (57), mise en marche du tapis roulant du four et de celui de l'ascenseur dans le sens inverse à précédemment pour amener le produit sur ledit ascenseur.
- (58), descente de l'ascenseur jusqu'en face de l'étagère de sortie (8).
- (59), mise en marche du tapis roulant de l'ascenseur et du tapis roulant de l'étagère de sortie pour amener le produit en face de l'ouverture de sortie (31).,
- (60), retour de l'ascenseur à sa position d'attente et immobilisation du produit (61).

Dans l'appareil sont disposés différents organes électriques et électroniques nécessaires à la dynamique du présent système. Ainsi, en (64) et (65), sont représentés les moteurs entraînant les tapis roulants des étagères. En (66), est représenté le moteur du tapis roulant de l'ascenseur.

En (67), le moteur du tapis roulant du four. En (68) le moteur de l'ascenseur. En (69), le fin de course bas de l'ascenseur. En (70), le fin de course haut de l'ascenseur. En (71), le palpeur de présence d'un produit dans le four. En (72), le palpeur de présence de produit sur l'ascenseur. En (74), le palpeur de présence d'un produit devant l'ouverture de sortie du distributeur. En (73), le fin de course de comptage d'étagère.

Tous les éléments électriques et électroniques décrits ci-dessus sont reliés à une unité centrale (76) par un multicable électrique (75).

Les touches de sélection (77) sont également reliées à l'unité centrale (76).

En (78), est représentée la caisse recevant les pièces de monnaie après avoir été contrôlées par le monnayeur (50).

L'unité centrale est le cœur du présent appareil. Elle peut être réalisée par circuit intégré.

Ainsi, en (50), est représenté un monnayeur dans lequel sont disposés des contacteurs (88) qui sont sollicités par les pièces de monnaie (89). A chaque pièce correspond un contact.

En (90), est représenté un totalisateur de chiffres, en (92), une mémoire pour le prix de chaque produit qui correspond à chaque étagère.

En (91) est représenté un comparateur. Si le montant inscrit au totalisateur est égal ou supérieur à celui inscrit dans la mémoire et correspondant à la touche de sélection, par exemple, la touche (87), un ordre est transmis au relais (98) qui établit le contact au moteur de l'ascenseur (68). Celui-ci se met en marche et le fin de course (73) placé sur ledit ascenseur compte les étagères grâce à une came placée sur chacune de celles-ci et venant solliciter tour à tour ledit fin de course.

Les impulsions de comptage sont transmises à un comarateur (97). Lorsque le nombre de plots comptés correspond au nombre de plots que représente la touche choisie, par exemple la touche (87), une information est donnée au relais (98) et le moteur (68) s'arrête.

En même temps, sont sollicités les relais (93) et (99), les moteurs (64) et (66) se mettent alors simultanément en marche. Le produit placé sur l'étagère correspondant au moteur (64) vient se placer sur l'ascenseur puis ledit produit sollicite le palpeur (72) qui émet une information vers les relais (93) et (99) qui sont coupés, et vers le relais (98) qui met en marche le moteur (68). Celui-ci monte l'ascenseur jusque dans le four dans lequel est placé un autre fin de course (70).

Lorsque celui-ci est sollicité par l'ascenseur, il agit sur le relais (98) qui cope le moteur (68) et il agit également sur les relais (99) et (100) qui mettent en marche les moteurs (66) et (67).

Le produit placé sur l'ascenseur se déplace pour aller dans le four et lorsqu'il atteint le palpeur (71), ce dernier agit sur les relais (99) et (100) qui coupent les moteurs (66) et (67).

Le palpeur (71) a également pour effet d'agir sur le relais de puissance (92) qui commande simultanément la fermeture du portillon (44) par l'électro-aimant (45) et la mise en marche du magnétron (20).

Enfin, la sollicitation de ce palpeur (71) a également pour effet de mettre en marche la base de temps dont la durée est déterminée par la mémoire du temps de chauffe (94), chaque temps étant défini par une touche de sélection.

Lorsque le temps est écoulé, une information est transmise, vers le relais de puissance (92) qui coupe le circuit, qui a pour effet l'arrêt du magnétron et l'ouverture du portillon. Ladite information est également transmise sur le relais (93) qui met en marche le moteur (68) ayant pour effet de descendre l'ascenseeur face à l'étagère de sortie (8).

Quand le fin de course (73) arrive sur la came de ladite étagère (8), le relais (98) est coupé et le moteur (68) s'arrête. Une information est donnée sur les relais (101) et (99), les moteurs (66) et (81) se mettent en marche et le produit qui est placé sur l'ascenseur vient se placer sur l'étagère de sortie (8) et celle-ci reste en marche jusqu'à ce que ledit produit vienne solliciter le palpeur (74). Ce dernier transmet alors une information vers le relais (101) et (99) qui coupent les moteurs (81) et (66); la même information est également dirigée vers le relais (98) qui met en marche le moteur (68) qui fait se déplacer l'ascenseur jusqu'au plancher du distributeur où se trouve un autre fin de course (69). Lorsque l'ascenseur sollicite le fin de course (69), ce dernier agit sur le relais (98) et le moteur (68) s'arrête.

Le cycle est terminé, l'ascenseur attend dans cette position jusqu'à une nouvelle sélection par un client.

Il est également possible de réaliser en variante un double four dont l'un fonctionne à micro-ondes et l'autre par conduction thermique obtenue par un bloc (62) dans lequel sont noyées des résistances chauffantes (63) placées sous le tapis roulant qui dans ce cas est réalisé en un matériau résistant à la chaleur, soit une feuille souple d'acier inoxydable.

On peut apporter de nombreuses modifications en dispositif, en particulier:
- Les étagères peuvent être réglables en hauteur grâce à des profilés perforés verticaux fixés dans l'armoire sur lesquels lesdites étagères sont accrochées ou vissées.
- Il peut y avoir plusieurs étagères les unes derrière les autres dans le sens de la profondeur, commandées chacune séparément.
- La largeur de l'armoire peut être plus grande ou plus petite, il peut y avoir plusieurs portes en verre ou autre matériau.
- L'ascenseur peut être placé au milieu de l'armoire avec des étagères à droite et à gauche dudit ascenseur. Les produits proviennent de l'une ou l'autre étagère selon la sélection opérée par le client.
- Il peut y avoir une fermeture automatique des portes (3) et (4).
- Il peut y avoir un élément de carrosserie sur l'armoire afin de cacher le four et el frigo.
- Dans cet élément de carrosserie peuvent être aménagées des fenêtres pour l'exposition de photos, de dispositives, de produits vendus dans l'appareil, d'un écran de télévision.
- Le tapis roulants peuvent être en matériau textile plastifié ou non, en matière plastique, ou être constitués par des feuilles métalliques flexibles.

**Revendications**

1. Distributeur automatique de produits chauds et/ou de produits froids, comportant une armoire isotherme (1) dans laquelle sont disposés des tapis roulants (6) superposés sur lesquels les produits (24) sont destinés à être posés en ligne, les extrémités correspondantes de ces tapis (6) étant, au moins d'un côté, alignées verticalement, au moins un four (15) situé au-dessus desdits tapis roulants (6), des moyens de réfrigération (16) de ladite aromoire (1), un ascenseur (9) comprenant un tapis roulant (11) dont une extrémité se déplace en regard desdites extrémités alignées desdits tapis roulants (6) juqu'au niveau dudit four (15), des moyens pour introduire les produits à chauffer dans ce four (15), des moyens pour transporter les produits chauffés et les produits à consommer froids vers une ouverture (31) où ils sont à la disposition du consommateur, des moyens pour commander, avant ou après prépaiement d'un produit choisi parmi les produits proposés (24), des mouvements appropriés desdits tapis roulants (6, 11) et de l'ascenseur (9) afin que ce produit soit transporté de la place où il se trouve soit, s'il s'agit d'un produit à chauffeur, d'abord dans le four (15), puis, une fois chaud dans l'ouverture (31), soit, s'il s'agit d'un produit à consommer froid, directement dans l'ouverture (31), caractérisé par le fait que lesdits moyens pour introduire lesdits produits à chauffeur dans le four (15) comprennent un tapis roulant (23) situé entièrement dans l'enceinte chauffante du four (15), et que lesdits moyens pour transporter les produits, chauds ou froids, vers l'ouverture (31) comprennent un tapis roulant de sortie (8), une des extrémités de chacun de ces deux tapis (8, 23) étant également alignée verticalement avec les extrémités alignées desdits tapis roulants (6), de manière que les produits chauds soient transportés de l'ascenseur (7) dans le four (15), puis, après avoir été chauffé, de ce four (15) vers l'ouverture (31) via l'ascenseur (9) par les tapis roulants (11, 23, 11, 8), et les produits à consommer froids, directement vers l'ouverture (31), via l'ascenseur (9), par les tapis roulants (11, 8).

2. Distributeur selon la revendication 1, caractérisé par le fait que ledit four (15) est monté sur ladite armoire (1), une ouverture (13) étant prévue dans le plafond de cette armoire (1) pour permettre audit tapis roulant (11) de l'ascenseur (9) d'atteindre le niveau où se trouve ledit tapis roulant (23) du four (15).

3. Distributeur selon la revendication 1, caractérisé par le fait que ledit four (15) ne comporte qu'une seule ouverture d'accès muni d'un portillon (44), à travers laquelle les produits à chauffeur entrent dans l'enceinte chauffante et les produits chauffés en sortent transportés par lesdits tapis (11, 23).

4. Distributeur selon la revendication 1, caractérisé par le fait que lesdits moyens de réfrigération de l'armoire isotherme (1) sont constitués par un groupe frigorifique (16) monté sur cette armoire.

5. Distributeur selon la revendication 1, caractérisé par le fait que le four (15) est un four à micro-ondes placé à côté du groupe frigorifique.

**Patentansprüche**

1. Automatische Ausgabegerät für warme und/oder kalte Waren, mit einem auf einer gleichförmigen Temperatur gehaltenen Schrank (1), in dem übereinander angeordnete Förderbänder (6) angeordnet sind, auf denen die Waren (24) in einer Reihe anzuordnen sind, wobei die entsprechenden Enden dieser Förderbänder (6) zumindestens auf einer Seite in Vertikalrichtung miteinander ausgerichtet sind, mit zumindestens einem Ofen (15), der oberhalb der Förderbänder (6) angeordnet ist, mit Kühleinrichtungen (16) für den Schrank (1), mit einem Aufzug (9), der ein Förderband (11) aufweist, dessen eines Ende sich gegenüberliegend zu den genannten miteinander ausgerichteten Enden der Förderbänder (6) bis zu einer Höhenlage des Ofens (15) bewegt, mit Einrichtungen zur Einführung der zu erwärmenden Waren in den Ofen (15), mit Einrichtungen zum Transport der erwärmten Waren und der kalt zu verzehrenden Waren in Richtung auf eine Öffnung (31) an der sie für den Verbraucher zur Verfügung stehen, mit Einrichtungen, die vor oder nach einer Vorauszahlung für eine aus den dargebotenen Waren (24) ausgewählte Ware die geeigneten Bewegungen der Förderbänder (6, 11) und des Aufzuges (9) derart steuern, dass diese Ware von der Stelle, an der sie sich befindet, entweder, wenn es sich um eine zu erwärmende Ware handelt, zunächst in den Ofen (15) und dann nach der Erwärmung in die Öffnung (31) transportiert wird, während, wenn es sich um eine kalt zu verzehrende Ware handelt, diese direkt in die Öffnung (31) transportiert wird, dadurch gekennzeichnet, dass die Einrichtungen zur Einführung der zu erwärmenden Waren in den Ofen (15) ein Förderband (23) umfassen, das vollständig im Heizraum des Ofens (15) angeordnet ist, und dass die Einrichtungen zum Transport der warmen oder kalten Waren zur Öffnung (31) ein Ausgangsförderband (8) umfassen, wobei ein Ende jedes dieser beiden Förderbänder (8, 23) ebenfalls in Vertikalrichtung mit den miteinander ausgerichteten Enden der Förderbänder (6) derart ausgerichtet ist, dass die warmen Waren von dem Aufzug (9) in den Ofen (15) und dann nach ihrer Erwärmung von dem Ofen (15) über den Aufzug (9) von den Förderbändern (11, 23, 11, 8) zur Öffnung (31) transportiert werden, während die kalt zu verzehrenden Waren über den Aufzug (9) von den Förderbändern (11, 8) direkt zur Öffnung (31) transportiert werden.

2. Ausgabegerät nach Anspruch 1, dadurch gekennzeichnet, dass der Ofen (15) auf dem Schrank (1) befestigt ist, wobei eine Öffnung (13) in der Deckwand des Schrankes (1) vorgesehen ist, damit das Förderband (11) des Aufzuges (9) die Höhenlage erreichen kann, in der sich das Förderband (23) des Ofens (15) befindet.

3. Ausgabegerät nach Anspruch 1, dadurch gekennzeichnet, dass der Ofen (15) lediglich eine einzige Zugangsöffnung aufweist, die mit einem Tor (44) versehen ist, durch die hindurch die zu erwärmenden Waren in den Heizraum eintreten und durch das hindurch die erwärmten Produkte beim Transport durch die Förderbänder (11, 23) austreten.

4. Ausgabegerät nach Anspruch 1, dadurch gekennzeichnet, dass die Kühleinrichtungen des eine gleichförmige Temperatur aufweisenden Schrankes (1) durch eine Kühlbaugruppe (16) gebildet sind, die auf dem Schrank befestigt ist.

5. Ausgabegerät nach Anspruch 1, dadurch gekennzeichnet, dass der Ofen (15) ein Mikrowellenofen ist, der neben der Kühlbaugruppe angeordnet ist.

Claims

1. Automatic dispenser for hot and/or cold products, comprising an isothermal cabinet (1) in which are disposed superimposed conveyor belts (6) on which the products (24) are intended to be placed in a line, the corresponding ends of these belts (6) being aligned vertically at least on one side, at least one oven (15) situated above said conveyor belts (6), means (16) for refrigerating said cabinet (1), a lift (9) comprising a conveyor belt (11) whereof one end moves opposite said aligned ends of the said conveyor belts (6) as far as the level of said oven (15), means for introducing the products to be heated into this oven (15), means for conveying the heated products and the products to be eaten cold towards an opening (31) where they are available to the consumer, means for controlling, before or after prepayment for a product chosen from the products offered (24), appropriate movements of the said conveyor belts (6, 11) and of the lift (9) in order that this product is conveyed from the place where it is located either, if it is a product to be heated, firstly into the oven (15), then, when hot into the opening (31), or, if it is a product to be eaten cold, directly into the opening (31), characterised by the fact that said means for introducing the said products to be heated into the oven (15) comprise a conveyor belt (23) situated completely in the heating enclosure of the oven (15) and that the said means for conveying the hot or cold products towards the opening (31) comprise an outlet conveyor belt (8), one of the ends of each of these two belts (8, 23) also being aligned vertically with the aligned ends of the said conveyor belts (6), so that the hot products are conveyed from the lift (7) into the oven (15), then, after being heated, from this oven (15) towards the opening (31) via the lift (9) by the conveyor belts (11, 23, 11, 8) and the products to be eaten cold, directly towards the opening (31), via the lift (9), by the conveyor belts (11, 8).

2. Dispenser according to Claim 1, characterised by the fact that the said oven (15) is mounted on said cabinet (1), an opening (13) being provided in the top of this cabinet (1) in order to enable the said conveyor belt (11) of the lift (9) to reach the level where the said conveyor belt (23) of the oven (15) is located.

3. Dispenser according to Claim 1, characterised by the fact that the said oven (15) comprises only a single access opening provided with a small door (44), through which the products to be heated enter the heating enclosure and the heated products conveyed by the said belts (11, 23) leave.

4. Dispenser according to Claim 1, characterised by the fact that the said means for refrigerating the isothermal cabinet (1) are constituted by a refrigerating unit (16) mounted on this cabinet.

5. Dispenser according to Claim 1, characterised by the fact that the oven (15) is a microwave oven located beside the refrigerating unit.

Fig. 1

Fig. 2

Fig.3

Fig. 4

Fig. 5

15

Fig. 6

Fig. 7

Fig. 8